(19) Europäisches Patentamt / European Patent Office / Office européen des brevets

(11) **EP 3 291 556 A1**

(12) **EUROPEAN PATENT APPLICATION**

(43) Date of publication:
07.03.2018 Bulletin 2018/10

(51) Int Cl.:
*H04N 19/48* (2014.01)   *H04N 17/00* (2006.01)
*H04N 19/85* (2014.01)

(21) Application number: **16186348.5**

(22) Date of filing: **30.08.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicants:
• **Deutsche Telekom AG**
**53113 Bonn (DE)**
• **Technische Universität Berlin**
**10625 Berlin (DE)**
• **Technische Universität Ilmenau**
**98693 Ilmenau (DE)**

(72) Inventors:
• **GARCIA, Marie-Neige**
**10249 Berlin (DE)**
• **ROBITZA, Werner**
**10961 Berlin (DE)**
• **RAAKE, Alexander**
**10405 Berlin (DE)**
• **LIST, Peter**
**59427 Unna (DE)**
• **FEITEN, Bernhard**
**13437 Berlin (DE)**
• **WÜSTENHAGEN, Ulf**
**15537 Grünheide (DE)**

(74) Representative: **Vossius & Partner**
**Patentanwälte Rechtsanwälte mbB**
**Siebertstrasse 3**
**81675 München (DE)**

(54) **METHOD AND APPARATUS FOR DETERMINING THE PERCEPTUAL VIDEO QUALITY OF A CHUNK OF MULTIMEDIA CONTENT**

(57)   The present invention relates to a method and an apparatus for determining the perceptual video quality of a chunk of multimedia content to be transmitted from a server to a client as well as a corresponding computer program product.

The method comprises the step of: determining the quantization degradation Dq of the video content of the multimedia content using at least one set of input parameters, wherein the at least one set of input parameters for the estimation of the quantization degradation Dq is selected considering at least one computational resource of a device on which the method is to be carried out and/or considering at least one available resource of the multimedia content.

Fig. 1

**Description**

The present invention relates to a method and an apparatus for determining the perceptual video quality of a chunk of multimedia content to be transmitted from a server to a client. The invention also relates to a computer program product comprising one or more computer readable media having computer executable instructions for performing the steps of the method of the present invention. Moreover, the present invention also relates to multimedia streaming over the Internet, and in particular to determining a measure for the video encoding quality of audiovisual content transmitted using video streaming technologies.

In order to ensure a high degree of satisfaction for the user of video services such as non-interactive streaming video (IPTV, VoD) and adaptive streaming services, the perceived video quality of those services needs to be estimated. It is a major responsibility for broadcast providers to maintain the quality of their services, of which video quality is one important factor. Video quality can be degraded during transmission by, for instance, compression using lossy video encoding techniques. In large networks, only fully automated quality monitoring probes can fulfil this requirement of measuring the video quality.

To this end, numerous video quality models are developed. They provide estimates of the video quality as perceived by the user, usually in form of calculated Mean Opinion Scores (MOS), which typically range between 1-5, where 5 corresponds to the best possible quality.

Those models can, for instance, output the degree of similarity between the video received at the user's end and the original non-degraded video. In addition, and in a more sophisticated manner, the Human Visual System (HVS) can be modelled.

Video quality models and thus measurement systems are generally classified as follow:

Quality model types:

- Full Reference (FR): a reference signal is required, which is compared with the degraded signal.
- Reduced-Reference (RR): partial information extracted from the reference signal is required.
- No-Reference (NR): no reference signal is required; the quality estimates are computed only using the degraded signal.

Input parameters types:

- signal/media-based: the decoded image (pixel-information) is required.
- parameter-based: packet-header-level information is required, with different depth of parsing depending on the level of encryption of the headers.
- bitstream-based: bitstream-level information is required. Parsed bitstream information includes payload, that is coding information, and partial or full decoding of the bitstream.
- hybrid: both signal and parameter and/or bitstream information are used.

Type of application:

- Network Planning: the model or measurement system is used before the implementation of the network in order to plan the best possible implementation.
- Service Monitoring: the model is used during service operation to compute the estimated perceived video quality.

Related information of the types of video quality models can be found in references [1] - [3].

The present invention refers to a video quality model based on a scalable design, which calculates the video encoding quality for chunks of video, preferably ranging from 2s of up to 20s, for which the video is encoded with a fixed set of encoding settings. At different scaling levels, the model can handle various levels of encryption of the stream. The method according to the present invention is also robust to various requirements in terms of computational complexity. For instance, the model can be implemented on a mobile device for which it can be configured to only partially parse the bitstream, even though the full bitstream is available, to save computational power.

In the present invention, four levels of encryptions and computational requirements are addressed:

1. The first level corresponds to the highest considered level of encryption and the lowest computational requirements. In that level, the model has only access to coarse information such as codec (encoder), encoding bitrate, resolution, framerate and the chunk duration and size in, e.g., bytes.
2. In the second level, the model also has access to the audio frame sizes and frame durations and to the video frame sizes (e.g., in bytes) and types (e.g., I, P, B frames).

3. In the third level, the model has access to the full bitstream. However, to limit the computational complexity, the model uses only up to, e.g., 2% of the bitstream information.

4. In the fourth level, the model is configured to parse the full bitstream.

Three types of degradations that contribute to the user's perceived quality can be covered by the method according to the present invention: quantization, upscaling and temporal degradations:

1. The quantization degradation, $Dq,$ refers to degradations due to lossy video encoding with different quantization settings. High quantization levels result in perceived artefacts such as blocking artefacts and blurring due to the use of a de-blocking filter in the decoder.

2. The upscaling degradation, $Du,$ refers to blurring artefacts due to encoding at lower resolution than the original video followed by the decoder upscaling the video back to a higher display resolution.

3. Finally, the temporal degradation, $Dt,$ refers to jerkiness artefacts due to a reduction of the framerate compared to the original video.

However, it is understood by the skilled person that the method according to the present invention may be directed to only one, two or all three of the aforementioned types of degradation, i.e. the quantization degradation, the upscaling degradation, or the temporal degradation.

In particular, according to the present invention, the calculated/computed results of the determination of the quantization degradation, the upscaling degradation, and the temporal degradation can be combined to compute the overall encoding video quality, $\widehat{MOS}.$

In general, the model form is the same, independently of the levels of encryption or computational requirements. A "core model" can be used for all instances, with the same equations and model inputs for all levels of encryptions and computational requirements. Depending on which encryption and model complexity requirements are selected, the method is capable of using different types of input information/input parameters. As the amount of input information can be chosen by the implementer to handle different encryption and computational complexity levels, the method is referred to as being *scalable*.

In the different cases of encryption/computational requirements, the same internal model structure can be used, where an intermediate set of parameters can be calculated from the different types of information available. Since more information is available from level to level (in order of their presentation above), the accuracy of the internal model parameters set increases, improving the overall video encoding quality prediction accuracy.

Moreover, according to the present invention, also different types of input information/input parameters can be selected one after another or in parallel, e.g. for double-checking the results of the determination of the quantization degradation.

In particular, in the present invention, the determination of the upscaling degradation and the temporal degradation and the integration/combination of the different types of degradation can be identical, independently of the levels of encryption and/or computational requirements, and the determination of the quantization degradation is the scalable component of the method. This latter part of the method is therefore instantiated in several modes, depending on the levels of encryption and computational requirements, that is, depending on how much information is available to the method.

It is an object of the invention to provide a method, an apparatus, and a respective computer program product for determining the perceptual video quality of a chunk of multimedia content to be transmitted from a server to a client. The method according to the present invention is computer-implemented. However, it is understood by the skilled person that there are also other ways of implementing the method according to the present invention.

This object is achieved by a method and a system according to the independent claims. Dependent patent claims refer to preferred embodiments.

The present invention relates to a method for determining the perceptual video quality of a chunk of multimedia content to be transmitted from a server to a client, the method comprising:

determining the quantization degradation Dq of the video content of the multimedia content using at least one set of input parameters, wherein the at least one set of input parameters for the estimation of the quantization degradation Dq is selected considering at least one computational resource of a device on which the method is to be carried out and/or considering at least one available resource of the multimedia content.

Preferably, the method further comprises the steps of: determining the upscaling degradation $Du$ and the temporal degradation $Dt$ of the chunk of multimedia content; and

determining the overall integrated quality of the video component of the multimedia content as a function of the quantization degradation $Dq$, the upscaling degradation $Du$ and the temporal degradation $Dt$.

Preferably, the method further comprises the steps of: selecting the set of input parameters and/or a corresponding at least one function for calculating the quantization degradation $Dq$ by considering the computational resources of the device on which the method is to be carried out and/or by considering the available resources of the chunk of multimedia content.

In other words, preferably, the method comprises the steps of: selecting the set of input parameters and/or a corresponding at least one function for calculating the quantization degradation Dq by considering the level of availability of the information from the chunk of multimedia content and/or other constraints such as the computational resources of the device on which the method is to be carried out.

Preferably, a set of input parameters $A$ to be selected to be used for determining the quantization degradation $Dq$ comprise at least one of the following: encoding video bitrate of the chunk, video encoding resolution, and frame rate.

Preferably, the encoding video bitrate of the chunk is computed considering the size of the chunk and the duration of the chunk. Preferably, the encoding video bitrate of the chunk is computed considering the size of the audio bitstream in the chunk and the video bitstream in the chunk and the duration of the video chunk. Preferably, the encoding video bitrate of the chunk is computed considering the number of video frames in the chunk and the number of video and audio frames in the chunk. Preferably, the number of video frames in the chunk is computed using the duration of the video chunk and the frame rate.

Preferably, the encoding video bitrate of the chunk is computed considering the frame size for each video frame in the chunk and the duration of a video frame in the chunk.

Preferably, the quantization degradation $Dq$ is calculated using the following variables: bit per pixel $bpp$ and difference in bit rate $brDiff$.

Preferably, $bpp$ is calculated as a function f of the size of the chunk, the video encoding resolution and the framerate. In other words, $bpp$ can be calculated as follows: $bpp := f(size$ of the chunk, video encoding resolution, framerate). Preferably, $brDiff$ is calculated as a function g of the size of the chunk and the targeted encoding video bitrate. In other words, $brDiff$ can be calculated as follows: $brDiff := g(size$ of the chunk, the targeted encoding video bitrate).

Preferably, $bpp$ is calculated as a function $f$ of the frame size for each video frame in the chunk, the video encoding resolution and the framerate. In other words, $bpp$ can be calculated as follows: $bpp := f(frame$ size for each video frame in the chunk, video encoding resolution, framerate). Preferably, $brDiff$ is calculated as a function g of the frame size for each video frame in the chunk and the targeted encoding video bitrate. In other words, $brDiff$ can be calculated as follows: brDiff := g(frame size for each video frame in the chunk, the targeted encoding video bitrate).

Preferably, a set of input parameters $B$ to be selected to be used for determining the quantization degradation $Dq$ comprise at least one of the following: the respective initial Quantization Parameter value for each frame in the chunk, the Quantization Parameter value for each complete Macroblock contained in the first predetermined number of byte of the payload of the respective frame, and the information on the frame type for the respective video frame in the chunk. It is understood by the skilled person that instead of a Macroblock, any other coding unit could be used, e.g. a coding tree unit in case of H.265/HEVC.

Preferably, a set of input parameters C to be selected to be used for determining the quantization degradation $Dq$ comprise at least one of the following: information on the number of decoded Macroblocks in the respective frame for each video frame in the chunk, information on the number of skipped Macroblocks in the respective frame for each video frame in the chunk, the Quantization Parameter value for each Macroblock in the respective video frame in the chunk, and the information on the frame type for the respective video frame in the chunk.

Preferably, the device on which the method is to be carried out is at least one of the following: a server or a terminal device.

Preferably, the at least one computational resource comprises at least one of the following: processor power, working memory, network speed. Preferably, the at least one computational resource comprises data input speed/data output speed, e.g. the speed of a hard disk drive.

Preferably, the at least one available resource of the multimedia content comprises at least one of the following: video codec, video bitrate, packet-header-level information, bitstream-level information. Preferably, the bitstream-level information comprises information on at least one of the following: the GOP Structure, audio codec, audio bit rate.

Preferably, the at least one available resource of the multimedia content comprises information on the decoded image; however, it is understood for the skilled person that the method according to the present invention also works solely on the bitstream information, i.e. data that can be parsed without the need of any information on the decoded image, i.e. pixel information and/or image information.

The invention also relates to an apparatus for determining the perceptual video quality of a chunk of multimedia content to be transmitted from a server to a client, comprising: a unit for determining the quantization degradation $Dq$ of the video content of the multimedia content using at least one set of input parameters, wherein the at least one set of input parameters for the estimation of the quantization degradation $Dq$ is selected considering at least one computational resource of a device on which the determination of the quantization degradation $Dq$ is to be carried out and/or considering at least one available resource of the multimedia content.

It is understood by the skilled person that the apparatus according to the present invention can be part of the device on which the determination of the quantization degradation $Dq$ is carried out. It is also an understood by the skilled person that the apparatus according to the present invention can be connected to a device on which the determination of the quantization degradation is carried out.

The invention also relates to a computer program product comprising one or more computer readable media having computer executable instructions for performing the steps of the method according to the present invention.

The present invention will be explained in more detail in the following with reference to preferred exemplary embodiments and with reference to the attached drawings, in which:

Fig. 1 shows a flowchart of the "core model" according to an embodiment of the invention;
Fig. 2 shows a flowchart of different modes for the determination of the quantization degradation according to an embodiment of the invention;
Fig. 3 shows a detailed flowchart of a mode for the determination of the quantization degradation according to an embodiment of the invention; and
Fig. 4 shows a detailed flowchart of a mode for the determination of the quantization degradation according to another embodiment of the invention.

**Exemplary embodiments of the present invention**

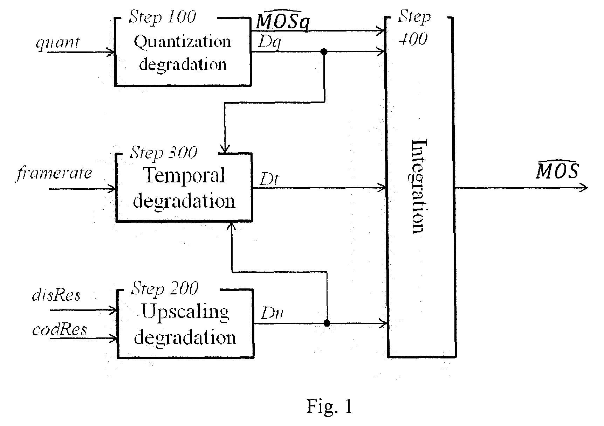

According to the embodiment as shown in Fig.1, the method comprises four steps: the determination of the quantization degradation in step 100, the determination of the upscaling degradation in step 200, the determination of the temporal degradation in step 300 and the integration/combination of the aforementioned different types of degradation in step 400. In other words, the quantization, upscaling, and temporal steps compute the perceptual video quality impact due to quantization, upscaling, and temporal degradations, respectively. The output of steps 100, 200 and 300 are combined by the integration step to compute the overall encoding video quality, $\widehat{MOS}$.

In the following, the "core model" of the invention according to a preferred embodiment is described before detailing the scalable quantization step and its different modes.

The following parameters are defined as follows:

- *quant, quant* $\in [0,1]$ : a parameter capturing the quantization degradation; its computation depends on the mode of the quantization degradation determination.
- *scaleFactor, scaleFactor* $\geq 1$: a parameter capturing the upscaling degradation
- *framerate*: the video frame rate in frames per second
- *disRes*: the video display resolution in pixels. For instance, High Definition 1080p screens have a video display resolution of *disRes* = $1920 \times 1080 = 2073600$ *pixels.*
- *codRes:* the video encoding resolution in pixels. The video resolution used to encode the video, for instance, *codRes* = $854 \times 480 = 409920$ *pixels.*

1. "Core model"

*1.1 Determination of quantization degradation; step 100 in Fig. 1*

According to an embodiment of the present invention, the quantization degradation $Dq$ can be computed/calculated as follows:

$$Dq = 100 - RfromMOS(\widehat{MOSq}) \qquad (1)$$

where *R fromMOS* is described in the Annex-section below, and

$$Dq = \max\left(\min(Dq, 100), 0\right)$$

and with

$$\widehat{MOSq} = q_1 + q_2 \cdot \exp\left(q_3 \cdot quant\right) \tag{2}$$

and

$$\widehat{MOSq} = \max\left(\min\left(\widehat{MOSq}, 5\right), 1\right)$$

Examples for $q_1$, $q_2$, and $q_3$ can be:

$q_1 = 4.66$, $q_2 = -0.07$ and $q_3 = 4.06$.

*1.2 Determination of upscaling degradation; step 200 in Fig. 1*

According to an embodiment of the present invention, the upscaling degradation Du can be computed/calculated as follows:

$$Du = u_1 \cdot \log_{10}(u_2 \cdot (\text{scaleFactor} - 1) + 1)) \tag{3}$$

with

$$Du = \max\left(\min(Du, 100), 0\right)$$

and

$$scaleFactor = \max\left(\frac{disRes}{codRes}, 1\right) \tag{4}$$

Examples for $u_1$ and $u_2$ can be:

For instance, $u_1 = 72.61$ and $u_2 = 0.32$.

*1.3 Determination of temporal degradation; step 300 in Fig. 1*

According to an embodiment of the present invention, the temporal degradation *Dt* can be computed/calculated as follows:

$$D_t = \begin{cases} \dfrac{(100 - D_q - D_u) \cdot (t_1 - t_2 \cdot framerate)}{t_3 + framerate}, & framerate < 24 \\ 0, & framerate \geq 24 \end{cases} \tag{5}$$

$$D_t = \max\left(\min(D_t, 100), 0\right)$$

Examples for $t_1$, $t_2$ and $t_3$ can be:

$t_1 = 30.98$, $t_2 = 1.29$ and $t_3 = 64.65$.

*1.4 Integration of the different degradations; step 400 in Fig. 1*

According to an embodiment of the present invention, the integration of the different degradations can be computed/calculated as follows:

$$D = \max\left(\min(Dq + Du + Dt, 100), 0\right) \qquad (6)$$

and

$$\hat{Q} = 100 - D \qquad (7)$$

Finally,

$$\widehat{MOS} = \begin{cases} \widehat{MOSq}, & if\ Du = 0\ and\ Dt = 0 \\ MOSfromR(\hat{Q}), & otherwise \end{cases} \qquad (8)$$

where $\widehat{MOS}$ and $\hat{Q}$ are the estimated video encoding qualities on two different scales: $\widehat{MOS} \in [1,5]$ and $\hat{Q} \in [0,100]$.

*MOS fromR* is described in the Annex-section below.
D is the overall degradation due to encoding.

According to the present embodiment, higher *D, Dq, Du* and *Dt* values mean higher degradations and therefore lower video quality.

According to the present embodiment, higher $\hat{Q}$ and $\widehat{MOS}$ values mean higher video quality.

2. Different modes of the determination of quantization degradation: scalable determination of the quantization degradation

According to an embodiment of the present invention, in this section, the determination of the quantization degradation is adjusted depending on the level of encryptions, i.e. the level of available resources of the multimedia content and the computational requirements.
According to this embodiment, the different modes correspond to various computation of the parameter *quant* in equation (2).

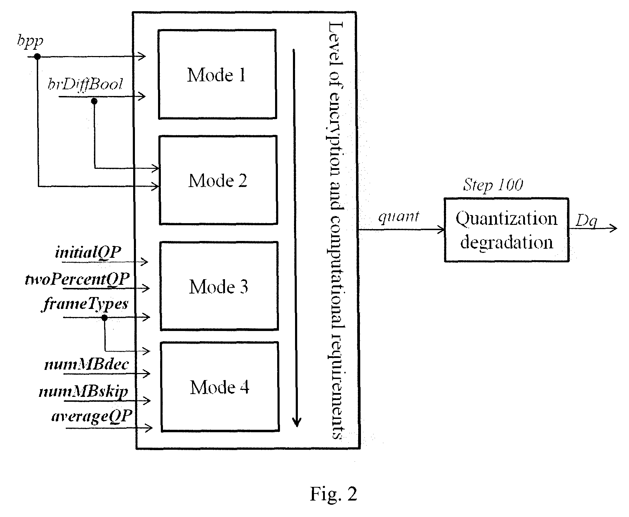

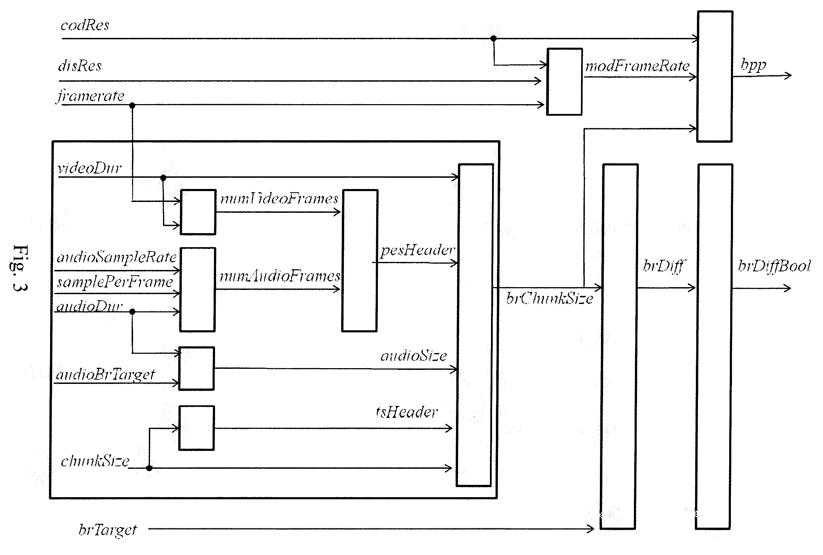

*2.1 Mode 1; see Figs. 2 and 3*

According to an exemplary embodiment of the present invention, the following set of input parameters A can used for determining the quantization degradation Dq, the set comprises: encoding video bitrate of the chunk, video encoding resolution, and frame rate.
The parameter *quant* can be calculated as follows

$$quant = a_1 \cdot \exp\left(a_2 \cdot bpp + a_3 \cdot brDiffBool\right) \qquad (9)$$

with, for instance, $a_1$ = 0.640, $a_2$ = -2.311 and $a_3$ = 0.187,
and

$$(10)$$

$$bpp = \frac{brChunkSize \cdot 1000}{codRes \cdot modFramerate}$$

and

$$brDiffBool = \begin{cases} 1, & brDiff < 0 \\ 0, & brDiff \geq 0 \end{cases} \qquad (11)$$

with

$$brDiff = \frac{brTarget - brChunkSize}{brTarget}. \qquad (12)$$

According to the present embodiment, the following parameters are used in equations (10), (11), and (12):

- brTarget is the targeted encoding video bitrate in Kilobit per second (kbps);
- modFramerate is a modified framerate in frame per second, which can be computed as follows:

$$modFramerate \qquad (13)$$

$$= \begin{cases} 30, & \frac{codRes}{disRes} < 0.12 \text{ and } framerate < 12 \\ framerate, & otherwise \end{cases}$$

- brChunkSize is the (estimated) encoding video bitrate in kbps computed from the chunk size as follows:

$$brChunkSize = \frac{chunkSize \cdot 8 - audioSize - tsHeader - pesHeader}{videoDur \cdot 1000} \qquad (14)$$

where

- *chunkSize* is the chunk (audio + video) size in bytes;
- *videoDur* is the duration of the video chunk in seconds;
and where

$$tsHeader = 4 \cdot 8 \cdot \frac{chunkSize}{188} \qquad (15)$$

and

$$pesHeader = 17 \cdot 8 \cdot (numVideoFrames + numAudioFrames) \qquad (16)$$

where

- *numVideoFrames* is the number of video frames in the chunk;
- *numAudioFrames* is the number of video and audio frames in the chunk.
*numVideoFrames* and *numAudioFrames* are computed as follows:

$$numVideoFrames = int(ceil(videoDur \cdot framerate)) \qquad (17)$$

and

$$numAudioFrames = int\left(ceil\left(audioDur \cdot \frac{audioSampleRate}{samplesPerFrame}\right)\right) \qquad (18)$$

where

- *audioSampleRate* is the audio sample rate in Hz, e.g. 48000;
- *samplesPerFrame* is the number of samples per audio frame, e.g. 1024 for AAC;
- *audioDur* is the audio duration within the chunk in seconds;
- *audioSize* is the computed encoding audio bit rate in kbps

$$audioSize = audioBrTarget \cdot audioDur \cdot 1000 \qquad (19)$$

where
*audioBrTarget* is the targeted encoding audio bitrate in kbps.

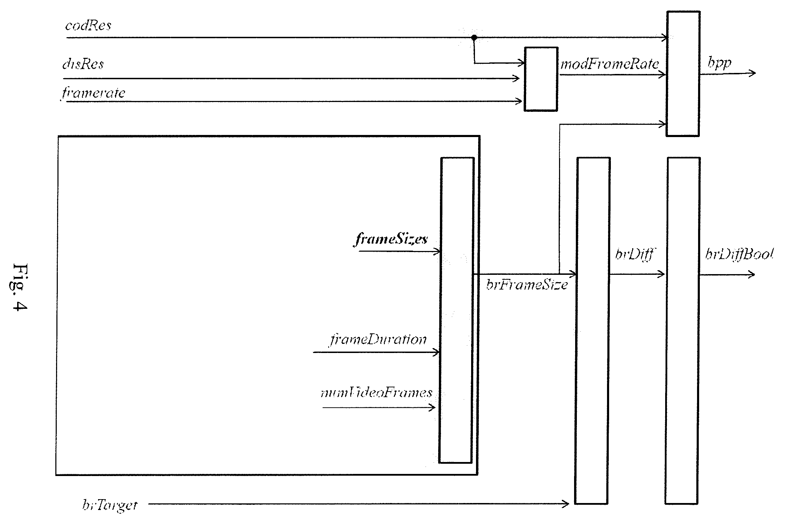

*2.2 Mode 2; see Figs. 2 and 4*

Mode 2 according to an exemplary embodiment of the present invention, is identical to mode 1, except that *bpp* and *brdiff* are computed from *brFrameSize* (the video bitrate in kbps computed from the video frame sizes) instead of *brChunkSize*, see Fig. 4.

In other words, the following set of input parameter B can used for determining the quantization degradation Dq, the set comprises:

the respective initial Quantization Parameter value for each frame in the chunk, the Quantization Parameter value for each complete Macroblock contained in the first predetermined number of byte of the payload of the respective frame, and the information on the frame type for the respective video frame in the chunk.

*brFramesize* can be computed as follows:

$$(20)$$

$$brFramesize = \frac{\sum_{index=1}^{numVideoFrames} frameSizes(index) \cdot 8}{frameDuration \cdot numVideoFrames \cdot 1000}$$

where

- *frameSizes* is a vector containing the frame size in bytes for each frame in the video chunk;
- *frameDuration* is the video frame duration in seconds (it is the same value for all frames in the video chunk); and
- *numVideoFrames* is the number of video frames in the chunk.

*2.3 Mode 3; see Fig. 2*

The parameter *quant* can be calculated as follows

$$quant = \frac{\overline{QP_{PB}}}{51} \qquad (21)$$

where $\overline{QP_{PB}}$ is the average over all values in the vector $QP_{PB}$, where $QP_{PB}$ is computed as described *in pseudocode1* below.

The following parameters are used:

- *initialQP,* a vector containing the initial Quantization Parameter (QP, with *QP E* [0,51]) value for each frame in the video chunk,
- *twoPercentQP*, a vector containing, for each frame in the video chunk, the average of the QP values for each complete MacroBlock (MB) contained in the first p% (in bytes) of the current frame's payload, with, for instance, p = 2. If the frame contains black borders on the top and bottom of the frame (e.g., so-called "letterboxing"), the QP values of the MBs contained in these black borders should be ignored,
- *frameTypes*, a vector containing the frame type for each video frame in the chunk.

It has to be noted that the video frames can be parsed from the bitstream in their order of arrival, and can be therefore captured in decoding order, not in presentation/display order.

```
Pseudocode1: computation of QP_PB
Note: Array indices start at 0.


frameTypes ← [I,P,B,…]
QP_PB ← []
p ← 2
index ← 0

FOR frameType IN frameTypes:
  IF (frameType = P) OR (frameType = B):
    IF (twoPercentQP[index] = 0) OR
    (twoPercentQP[index] could not be computed) OR
    (p% for the frame contains only MBs in black border region):
      QP_PB[index] ← initialQP[index]
    ELSE:
      QP_PB[index] ← twoPercentQP[index]
    index ← index + 1
```

*2.4 Mode 4; see Fig. 2*

The parameter *quant* can be calculated similar to the calculation in mode 3:

$$quant = \frac{\overline{QP_{PB}}}{51} \qquad (22)$$

where $\overline{QP_{PB}}$ is the average over all values in the vector $QP_{PB}$. However, in mode 4, $QP_{PB}$ is computed as described in *pseudocode2* below.

The following parameters are used:

- numMBdec, a vector containing the number of decoded MBs in the current frame for each video frame in the chunk,
- numMBskip, a vector containing the number of skipped MBs in the current frame for each video frame in the chunk,
- *averageQP*, a vector containing, for each video frame in the chunk, the average over the current frame of the QP values per MB, ignoring MBs in the black border areas if the frame contains black borders,
- frameTypes, a vector containing the frame types for each video frame in the chunk.

As for mode 3, video frames can be parsed from the bitstream and can be therefore captured in decoding order.

```
Pseudocode2: computation of QP_PB
Note: Array indices start at 0.

frameTypes ← [I,P,B,…]
QP_P ← []
QP_B ← []
QP_PB ← []
index ← 0

FOR frameType IN frameTypes:

  CASE frameType = P:

    IF  (length(QP_P) = 0) OR
        (numMBskip[index] / numMBdec[index] < 0.99):
          QPtmp ← averageQP[index]
    QP_P.append(QPtmp)

  CASE frameType = B:
    QP_B.append(averageQP[index])

  CASE (frameType = I) AND (length(QP_P) > 0):

    IF length(QP_P) > 1:
      QP_P[length(QP_P)-1] ← QP_P[length(QP_P)-2]
    ELSE:
      QP_P ← []

  index ← index + 1
QP_PB ← QP_P
QP_PB.append(QP_B)
```

3. Annex

Two functions are used in the above sections are defined as follows according to an embodiment of the present invention:

- *MOSfromR* is a function transforming quality scores expressed on a 100-point scale [0,100] onto a 5-point [1,5] quality scale, where higher values mean higher quality.
- *R fromMOS* is the inverse function of *MOSfromR.*

In addition:

- MOS is the quality expressed on the 5-point quality scale [1,5]
- Q is the quality expressed on the 100-point quality scale [0,100]

*MOSfromR* can be expressed as follows:

$$MOSfromR: \mathbb{R} \longmapsto \mathbb{R}$$

$$Q \longmapsto MOS := MOSfromR(Q)$$

if Q > 0 and Q < 100:

$$MOS = MOS\_MIN + (MOS\_MAX-MOS\_MIN)*Q/100 + Q*(Q-60)*(100-Q)*0.000007$$

else if Q >= 100:

$$MOS = MOS\_MAX$$

else if Q <=0:

$$MOS = MOS\_MIN$$

where MOS MAX = 4.9 and MOS_MIN = 1.05

*R fromMOS* can be expressed as follows:

$$RfromMOS: \mathbb{R} \longmapsto \mathbb{R}$$

$$MOS \longmapsto Q := RfromMOS(MOS)$$

if MOS > 4.5:

$$MOS = 4.5$$

if MOS > 2.7505:

$$h = \frac{1}{3} \cdot \left( \pi - \arctan \left( \frac{15 \cdot \sqrt{-903522 + 1113960 \cdot MOS - 202500 \cdot MOS^2}}{6750 \cdot MOS - 18566} \right) \right)$$

else:

$$h = \frac{1}{3} \cdot arctan \left( \frac{15 \cdot \sqrt{-903522 + 1113960 \cdot MOS - 202500 \cdot MOS^2}}{18566 - 6750 \cdot MOS} \right)$$

$$Q = \frac{20 \cdot (8 - \sqrt{226} \cdot cos \left( h + \frac{\pi}{3} \right))}{3}$$

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

4. <u>References</u>

[1] A. Raake, J. Gustafsson, S. Argyropoulos, M.-N. Garcia, D. Lindegren, G. Heikkilä, M. Pettersson, P. List and B. Feiten, "IP-Based Mobile and Fixed Network Audiovisual Media Services" in IEEE Signal Processing Magazine, pp 68-79, 2011.
[2] A. Takahashi, D. Hands, and V. Barriac, "Standardization Activities in the ITU for a QoE Assessment of IPTV," in IEEE Communication Magazine, 2008.
[3] S. Winkler and P. Mohandas, "The Evolution of Video Quality Measurement: From PSNR to Hybrid Metrics," in IEEE Trans. Broadcasting, 2008.

**Claims**

1. Method for determining the perceptual video quality of a chunk of multimedia content to be transmitted from a server to a client, the method comprising:

    determining the quantization degradation $Dq$ of the video content of the multimedia content using at least one set of input parameters, wherein the at least one set of input parameters for the estimation of the quantization degradation $Dq$ is selected considering at least one computational resource of a device on which the method is to be carried out and/or considering at least one available resource of the multimedia content.

2. Method according to claim 1, further comprising the steps of:

    determining the upscaling degradation $Du$ and the temporal degradation $Dt$ of the chunk of multimedia content; and
    determining the overall integrated quality of the video component of the multimedia content as a function of the quantization degradation $Dq$, the upscaling degradation $Du$ and the temporal degradation $Dt$.

3. Method according to any of the preceding claims, further comprising the step of:

    selecting the set of input parameters and/or a corresponding at least one function for calculating the quantization degradation $Dq$ by considering the computational resources of the device on which the method is to be carried out and/or by considering the available resources of the chunk of multimedia content.

4. Method according to any one of claims 1 to 3, wherein a set of input parameters $A$ to be selected to be used for determining the quantization degradation $Dq$ comprise at least one of the following:

    encoding video bitrate of the chunk, video encoding resolution, and frame rate.

5. Method according to claim 4, wherein the encoding video bitrate of the chunk is computed considering the size of the chunk and the duration of the chunk.

6. Method according to claim 4, wherein the encoding video bitrate of the chunk is computed considering the frame size for each video frame in the chunk and the duration of a video frame in the chunk.

7. Method according to claim 4 or 5, wherein the quantization degradation $Dq$ is calculated using the following variables: bit per pixel $bpp$ and difference in bit rate $brDiff$,
    wherein $bpp$ is calculated as a function f of the size of the chunk, the video encoding resolution and the framerate; and
    wherein $brDiff$ is calculated as a function g of the size of the chunk and the targeted encoding video bitrate.

8. Method according to claim 4 or 6, wherein the quantization degradation $Dq$ is calculated using the following variables: bit per pixel $bpp$ and difference in bit rate $brDiff$,
    wherein $bpp$ is calculated as a function $f$ of the frame size for each video frame in the chunk, the video encoding resolution and the framerate; and
    wherein $brDiff$ is calculated as a function g of the frame size for each video frame in the chunk and the targeted encoding video bitrate.

9. Method according to any of the preceding claims, wherein a set of input parameters *B* to be selected to be used for determining the quantization degradation *Dq* comprise at least one of the following:

the respective initial Quantization Parameter value for each frame in the chunk, the Quantization Parameter value for each complete Macroblock contained in the first predetermined number of byte of the payload of the respective frame, and the information on the frame type for the respective video frame in the chunk.

10. Method according to any of the preceding claims, wherein a set of input parameters *C* to be selected to be used for determining the quantization degradation *Dq* comprise at least one of the following:

information on the number of decoded Macroblocks in the respective frame for each video frame in the chunk, information on the number of skipped Macroblocks in the respective frame for each video frame in the chunk, the Quantization Parameter value for each Macroblock in the respective video frame in the chunk, and the information on the frame type for the respective video frame in the chunk.

11. Method according to any of the preceding claims, wherein the device on which the method is to be carried out is at least one of the following: a server or a terminal device.

12. Method according to any of the preceding claims, wherein the at least one computational resource comprises at least one of the following: processor power, working memory, network speed.

13. Method according to any of the preceding claims, wherein the at least one available resource of the multimedia content comprises at least one of the following: video codec, video bitrate, packet-header-level information, bitstream-level information.

14. Apparatus for determining the perceptual video quality of a chunk of multimedia content to be transmitted from a server to a client, comprising:

a unit for determining the quantization degradation *Dq* of the video content of the multimedia content using at least one set of input parameters, wherein the at least one set of input parameters for the estimation of the quantization degradation *Dq* is selected considering at least one computational resource of a device on which on which the determination of the quantization degradation *Dq* is to be carried out and/or considering at least one available resource of the multimedia content.

15. Computer program product comprising one or more computer readable media having computer executable instructions for performing the steps of the method according any one of claims 1 to 13.

*Step 100* — $\widehat{MOSq}$

*quant* → Quantization degradation

$Dq$

*Step 300* Temporal degradation

*framerate* →

$Dt$

*Step 200* Upscaling degradation

*disRes* →
*codRes* →

$Du$

*Step 400* Integration → $\widehat{MOS}$

Fig. 1

Fig. 2

Fig. 3

Fig. 4

**EP 3 291 556 A1**

# EUROPEAN SEARCH REPORT

Application Number

EP 16 18 6348

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RAAKE A ET AL: "T-V-model: Parameter-based prediction of IPTV quality", ACOUSTICS, SPEECH AND SIGNAL PROCESSING, 2008. ICASSP 2008. IEEE INTERNATIONAL CONFERENCE ON, IEEE, PISCATAWAY, NJ, USA, 31 March 2008 (2008-03-31), pages 1149-1152, XP031250760, ISBN: 978-1-4244-1483-3 * the whole document * | 1-4, 11-15 | INV. H04N19/48 H04N17/00 H04N19/85 |
| X | EP 2 701 397 A1 (DEUTSCHE TELEKOM AG [DE]) 26 February 2014 (2014-02-26) * paragraph [0068] - paragraph [0074] * | 1,3-8, 11-15 | |
| X | EP 2 018 069 A1 (NIPPON TELEGRAPH & TELEPHONE [JP]) 21 January 2009 (2009-01-21) * paragraph [0027] - paragraph [0037]; figures 1,2 * | 1,3,4, 11-15 | |
| X | EP 2 252 073 A1 (NIPPON TELEGRAPH & TELEPHONE [JP]) 17 November 2010 (2010-11-17) * paragraph [0016] - paragraph [0027]; figures 5,6,15 * * paragraph [0043] - paragraph [0049]; figures 8,17 * | 1,3,9-15 | TECHNICAL FIELDS SEARCHED (IPC) H04N |

-/--

The present search report has been drawn up for all claims

| Place of search | Date of completion of the search | Examiner |
|---|---|---|
| The Hague | 24 February 2017 | Georgiou, Georgia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 16 18 6348

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHEN ZHIBO ET AL: "Hybrid Distortion Ranking Tuned Bitstream-Layer Video Quality Assessment", IEEE TRANSACTIONS ON CIRCUITS AND SYSTEMS FOR VIDEO TECHNOLOGY, IEEE SERVICE CENTER, PISCATAWAY, NJ, US, vol. 26, no. 6, 1 June 2016 (2016-06-01), pages 1029-1043, XP011613359, ISSN: 1051-8215, DOI: 10.1109/TCSVT.2015.2441432 [retrieved on 2016-06-02] * section [III.A Key Features Extracted From Video Bitstream]; figure 1 * * section [III.E Hybrid Distortion Ranking Based Pooling Strategy for Artifacts Combination] * | 1,9,10, 14,15 | |

-----

TECHNICAL FIELDS
SEARCHED      (IPC)

The present search report has been drawn up for all claims

| Place of search | Date of completion of the search | Examiner |
|---|---|---|
| The Hague | 24 February 2017 | Georgiou, Georgia |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 18 6348

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2017

| Patent document cited in search report | | | Publication date | Patent family member(s) | | | Publication date |
|---|---|---|---|---|---|---|---|
| EP 2701397 | A1 | | 26-02-2014 | CN | 104488265 | A | 01-04-2015 |
| | | | | EP | 2701397 | A1 | 26-02-2014 |
| | | | | ES | 2526080 | T3 | 05-01-2015 |
| | | | | HR | P20141060 | T1 | 19-12-2014 |
| | | | | JP | 2015533269 | A | 19-11-2015 |
| | | | | KR | 20150045958 | A | 29-04-2015 |
| | | | | PT | 2701397 | E | 12-12-2014 |
| | | | | US | 2015138373 | A1 | 21-05-2015 |
| | | | | WO | 2014029561 | A1 | 27-02-2014 |
| EP 2018069 | A1 | | 21-01-2009 | CA | 2604139 | A1 | 09-11-2007 |
| | | | | CN | 101151903 | A | 26-03-2008 |
| | | | | EP | 2018069 | A1 | 21-01-2009 |
| | | | | JP | 4490483 | B2 | 23-06-2010 |
| | | | | KR | 20080002778 | A | 04-01-2008 |
| | | | | US | 2009225170 | A1 | 10-09-2009 |
| | | | | WO | 2007129423 | A1 | 15-11-2007 |
| EP 2252073 | A1 | | 17-11-2010 | BR | PI0909331 | A2 | 29-09-2015 |
| | | | | CN | 101978700 | A | 16-02-2011 |
| | | | | EP | 2252073 | A1 | 17-11-2010 |
| | | | | JP | 2009260940 | A | 05-11-2009 |
| | | | | KR | 20100126397 | A | 01-12-2010 |
| | | | | US | 2011013694 | A1 | 20-01-2011 |
| | | | | WO | 2009116666 | A1 | 24-09-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. RAAKE ; J. GUSTAFSSON ; S. ARGYROPOULOS ; M.-N. GARCIA ; D. LINDEGREN ; G. HEIKKILÄ ; M. PETTERSSON ; P. LIST ; B. FEITEN.** IP-Based Mobile and Fixed Network Audiovisual Media Services. *IEEE Signal Processing Magazine,* 2011, 68-79

- Standardization Activities in the ITU for a QoE Assessment of IPTV. **A. TAKAHASHI ; D. HANDS ; V. BARRIAC.** IEEE Communication Magazine. 2008
- **S. WINKLER ; P. MOHANDAS.** The Evolution of Video Quality Measurement: From PSNR to Hybrid Metrics. *IEEE Trans. Broadcasting,* 2008